# EUROPEAN PATENT APPLICATION

(11) **EP 4 327 942 A1**
(43) Date of publication of application: **28.02.2024**
(21) Application number: 23805842.4
(22) Date of filing: 13.04.2023
(51) Int. Cl.: B01J 49/75, C02F 1/42, A47J 31/00

(54) **RESIN REGENERATION METHOD OF WATER SOFTENING DEVICE**

(30) Priority: 30.05.2022 CN 202210605788
(71) Applicant: Foshan Midea Chungho Water Purification Equipment Co., Ltd., Foshan, Guangdong 528311 (CN); Midea Group Co., Ltd., Foshan, Guangdong 528311 (CN)
(72) Inventor: HAO, Zhipeng, Foshan, Guangdong 528311 (CN); HU, Chenghuan, Foshan, Guangdong 528311 (CN); QING, Pu, Foshan, Guangdong 528311 (CN); ZHANG, Bo, Foshan, Guangdong 528311 (CN); GONG, Ziming, Foshan, Guangdong 528311 (CN); HUANG, Rensheng, Foshan, Guangdong 528311 (CN); ZHENG, Yuedong, Foshan, Guangdong 528311 (CN); LIAO, Yumin, Foshan, Guangdong 528311 (CN)
(74) Representative: Whitlock, Holly Elizabeth Ann
(86) International application number: PCT/CN2023/088200
(87) International publication number: WO 2023/231607

(57) **Abstract**

A method for regenerating resin of a water softening device comprising the following steps: controlling a backwashing assembly to suck a salt solution from a salt tank to wash the resin in a resin tank in the water softening device through the salt solution; determining that washing of the resin by the salt solution is completed, and controlling the backwashing assembly to connect the resin tank with a raw water waterway, so as to obtain raw water from the raw water waterway to wash the resin in the resin tank; wherein the backwashing assembly is used for executing forward washing process or backwashing process.

## Description

### Cross-reference to related application

The present application is filed on the basis of and claims priority to Chinese Patent Application No.: 202210605788.3, filed on May 30, 2022, the entire disclosure of which is incorporated herein by reference.

### Technical Field

The disclosure relates to the technical field of soft water preparation, in particular to a method for regenerating resin of a water softening device and the water softening device.

### Background Art

At present, in the preparation of soft water, the softening resin in the water softener is generally used to soften raw water to achieve the purpose of preparing soft water. In order to ensure the preparation effect of soft water, it is necessary to add regeneration salt into the water softener to restore the softening capacity of the resin at the right time.

In the related art, it is generally that when the preparation period of soft water expires, a salt solution is formed by dissolving in the salt tank in the water softening device through the raw water inlet waterway, then the salt solution is sucked into the resin tank via the salt suction jet in the salt tank to wash the resin in the resin tank, then the salt solution is discharged via the drainage waterway to replace the Ca²⁺ and Mg²⁺ ions adsorbed on the softening resin by Na⁺ ions in the salt solution, thus completing the washing of the resin by the salt solution to allow the regeneration of the resin and restore the softening capacity of the resin.

However, in the process of restoring the softening capacity of the resin using the related art, in order to enable the resin to restore a better softening capacity, the amount of salt consumed for each regeneration of the resin usually needs to be about 180 g/L, which is a large amount of salt consumption, resulting in a waste of natural resources.

### Summary of the Invention

The disclosure is intended to solve at least one of the technical problems existing in the related art. To this end, the disclosure provides a method for regenerating resin of a water softening device, which can effectively reduce salt consumption and save natural resources while enabling the resin to restore a better softening capacity.

The disclosure also provides a resin regeneration apparatus for a water softening device.

The disclosure also provides an electronic device.

The disclosure also provides a computer-readable storage medium.

The disclosure also provides a water softening device.

According to an embodiment of a first aspect of the disclosure, a method for regenerating resin of a water softening device comprises:
controlling a backwashing assembly to suck a salt solution from a salt tank to wash the resin in a resin tank in the water softening device through the salt solution;
in accordance with a determination that washing of the resin by the salt solution is completed, controlling the backwashing assembly to connect the resin tank with a raw water waterway, so as to obtain raw water from the raw water waterway to wash the resin in the resin tank.

An embodiment of the disclosure provides a resin regeneration method for a water softening device, by controlling the backwashing assembly to suck the salt solution to wash the resin, and then controlling the backwashing assembly to connect a resin tank with a raw water waterway, and using the raw water to wash the water-softening salt solution attached onto the resin, so that the water-softening salt solution attached onto the resin may be utilized again to adsorb more calcium ions and magnesium ions, and allow the softening of the resin again. Moreover, the calcium ions and magnesium ions are fully adsorbed after a long period of time and massive process, but the resin regeneration process takes only a short time, so only a small amount of calcium ions and magnesium ions are adsorbed after a short period of washing with raw water, which will not affect the softening effect of the resin by using the water-softening salt solution attached onto the resin, thus effectively reducing the salt consumption and saving natural resources while enabling the resin to restore a better softening capacity.

According to an embodiment of the disclosure, controlling the backwashing assembly to connect the resin tank with the raw water waterway to obtain raw water from the raw water waterway to wash the resin in the resin tank comprises:
controlling the backwashing assembly to start backwashing process by connecting a lower drain port of a water distribution pipe extending to the bottom of the resin tank in the backwashing assembly with the raw water waterway, so as to obtain raw water from the raw water waterway to backwash the resin of the resin tank.

According to an embodiment of the disclosure, the method further comprises:
determining that a washing duration of the backwashing process has reached a first preset duration, and controlling the backwashing assembly to stop the backwashing process.

According to an embodiment of the disclosure, the method further comprises:
determining that the salt content of wastewater discharged in the backwashing process is less than a first preset value, and controlling the backwashing assembly to stop the backwashing process.

According to an embodiment of the disclosure, controlling the backwashing assembly to connect the resin tank with the raw water waterway to obtain raw water from the raw water waterway to wash the resin in the resin tank comprises:
controlling the backwashing assembly to start forward washing process by connecting an upper drain port disposed above the resin in the backwashing assembly with the raw water waterway, so as to obtain raw water from the raw water waterway for forward washing the resin in the resin tank.

According to an embodiment of the disclosure, the method further comprises:
determining that the washing duration of the forward washing process has reached a second preset duration, and controlling the backwashing assembly to stop the forward washing process.

According to an embodiment of the disclosure, the method further comprises:
determining that the salt content of wastewater discharged in the forward washing process is less than a second preset value, and controlling the backwashing assembly to stop the forward washing process.

A resin regeneration apparatus for a water softening device according to an embodiment of a second aspect of the disclosure comprises:
a salt solution washing module that is used for controlling a backwashing assembly to suck the salt solution from a salt tank to wash the resin in a resin tank in the water softening device through the salt solution; and
a resin washing module that is used for in accordance with a determination that washing of the resin by the salt solution is completed, controlling the backwashing assembly to connect the resin tank with a raw water waterway, so as to obtain raw water from the raw water waterway to wash the resin in the resin tank.

An electronic device according to an embodiment of a third aspect of the disclosure comprises:
a processor and a memory storing a computer program, wherein the method for regenerating resin of a water softening device of any one of the above-mentioned embodiments is implemented when the computer program is executed by the processor.

A computer-readable storage medium according to an embodiment of a fourth aspect of the disclosure on which a computer program is stored, wherein the method for regenerating resin of a water softening device of any one of the above-mentioned embodiments is implemented when the computer program is executed by the processor.

A water softening device according to an embodiment of a fifth aspect of the disclosure comprises:
a salt tank that is used for storing a salt solution;
a resin tank, the resin tank being provided with resin;
a backwashing assembly, a water inlet side of the backwashing assembly is connected to the salt tank and a raw water waterway, and a water outlet side of the backwashing assembly is connected to the resin tank for executing forward washing process or backwashing process; and
a controller connected with the backwashing assembly for executing the method for regenerating resin of a water softening device according to any one of the above-mentioned embodiments.

According to an embodiment of the disclosure, the interface of the backwashing assembly for connecting to the raw water waterway is provided with a flow restriction buckle and a rigid pipeline through which the water flows, and the rigid pipeline is in interference fit with the through hole of the flow restriction buckle.

The above one or more technical solutions in the embodiment of the disclosure have at least one of the following technical effects:
By controlling the backwashing assembly to suck the salt solution to wash the resin, and then controlling the backwashing assembly to connect a resin tank with a raw water waterway, and using the raw water to wash the water-softening salt solution attached onto the resin, so that the water-softening salt solution attached onto the resin may be utilized again to adsorb more calcium ions and magnesium ions, and allow the softening of the resin again. Moreover, the calcium ions and magnesium ions are fully adsorbed after a long period of time and massive process, but the resin regeneration process takes only a short time, so only a small amount of calcium ions and magnesium ions are adsorbed after a short period of washing with raw water, which will not affect the softening effect of the resin by using the water-softening salt solution attached onto the resin, thus effectively reducing the salt consumption and saving natural resources while enabling the resin to restore a better softening capacity.

### Brief Description of the Drawings

In order to illustrate the technical solution in the disclosure or the prior art more clearly, the accompanying drawings that need to be used in the description of the embodiments or the prior art will be briefly introduced below. Obviously, the drawings in the following description are some embodiments of the disclosure, and other drawings can be obtained according to these drawings without creative work for a person skilled in the art.
Figure 1 is a flow diagram of a method for regenerating resin of a water softening device provided by an embodiment of the disclosure;
Figure 2 is a structural schematic diagram of a backwashing assembly provided by an embodiment of the disclosure;
Figure 3 is a structural schematic diagram of an interface of the backwashing assembly connected to the raw water waterway provided by an embodiment of the disclosure;
Figure 4 is a schematic cross-sectional view of the interface of the backwashing assembly for connecting to the raw water waterway provided by an embodiment of the disclosure;
Figure 5 is a schematic diagram of the water flow direction in the water preparing process of the water softening device provided by an embodiment of the disclosure;
Figure 6 is a schematic diagram of the water flow direction of the water injection process during the salt solution washing process provided by an embodiment of the disclosure;
Figure 7 is a schematic diagram of the water flow direction of the washing process during the salt solution washing process provided by an embodiment of the disclosure;
Figure 8 is a schematic diagram of the water flow direction in the backwashing process provided by an embodiment of the disclosure;
Figure 9 is a schematic diagram of the water flow direction in the forward washing process provided by an embodiment of the disclosure;
Figure 10 is a structural schematic diagram of a resin regeneration apparatus of a water softening device provided by an embodiment of the disclosure;
Figure 11 is a structural schematic diagram of an electronic device provided by an embodiment of the disclosure; and
Figure 12 is a structural schematic diagram of a water softening device provided by an embodiment of the disclosure.

### Specific Modes for Carrying Out the Embodiments

In order to make the purpose, technical solutions and advantages of this disclosure clearer, the technical solutions in this disclosure will be described clearly and completely in conjunction with the drawings in the embodiments of this disclosure. Obviously, the described embodiments are part of the embodiments of this disclosure, but not all of them. Based on the embodiments in this disclosure, all other embodiments obtained by those of ordinary skilled in the art without creative work belong to the protection scope of this disclosure.

Next, the method for regenerating resin of a water softening device and the water softening device provided by the embodiment of the disclosure will be introduced and explained in detail through several specific embodiments.

Next, the resin regeneration apparatus of the water softening device provided by the disclosure will be described, and the resin regeneration apparatus of the water softening device described below and the method for regenerating resin of a water softening device described above can refer to each other correspondingly.

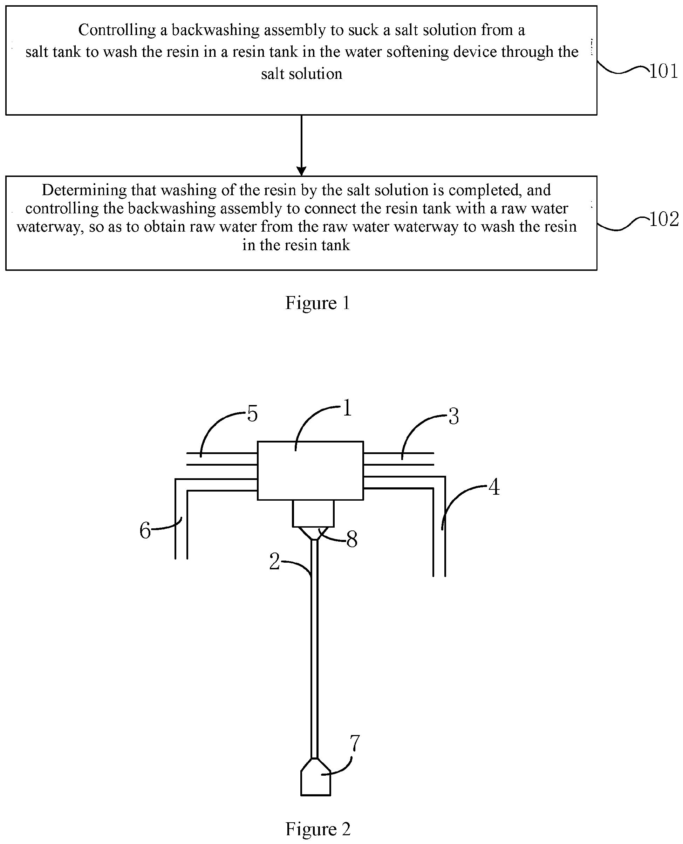

In an embodiment, a method for regenerating resin of a water softening device is provided, which is applied to controllers, such as single chip computers or processors, for controlling washing of the resin by backwashing assembly. As shown in Fig. 1, a method for regenerating resin of a water softening device provided by the present embodiment comprises:
Step 101, controlling a backwashing assembly to suck a salt solution from a salt tank to wash the resin in a resin tank in the water softening device through the salt solution; and
Step 102, in accordance with a determination that washing of the resin by the salt solution is completed, controlling the backwashing assembly to connect the resin tank with a raw water waterway, so as to obtain raw water from the raw water waterway to wash the resin in the resin tank.

By controlling the backwashing assembly to suck the salt solution to wash the resin, and then controlling the backwashing assembly to connect a resin tank with a raw water waterway, and using the raw water to wash the water-softening salt solution attached onto the resin, so that the water-softening salt solution attached onto the resin may be utilized again to adsorb more calcium ions and magnesium ions, and allow the softening of the resin again. Moreover, the calcium ions and magnesium ions are fully adsorbed after a long period of time and massive process, but the resin regeneration process takes only a short time, so only a small amount of calcium ions and magnesium ions are adsorbed after a short period of washing with raw water, which will not affect the softening effect of the resin by using the water-softening salt solution attached onto the resin, thus effectively reducing the salt consumption and saving natural resources while enabling the resin to restore a better softening capacity.

In an embodiment, a backwashing assembly is an assembly with backwash function, which may implement the forward washing process and backwashing process of the resin. It is understood that the water flows through the resin in the same direction during the forward washing process and the preparation of the soft water, that is, controlling the water flow from the top of the resin tank to pass through the resin from top to bottom; and the backwashing process is to control the water flow from the bottom of the resin tank to reversely pass through the resin. As shown in Fig. 2, the backwashing assembly comprises a control valve 1 and a water distribution pipe 2; the control valve 1 is provided with a plurality of interfaces, which are respectively connected with a water distribution pipe 2, a raw water waterway 3, a salt water waterway 4, a soft water waterway 5 and a waste water waterway 6. Among them, the salt water waterway 4 includes a salt suction jet. The water distribution pipe 2 is used to be arranged in the resin cavity of the resin tank, and the other end thereof is used to extend to the bottom of the resin tank. The control valve 1 may be used to connect any interface, so as to control the direction of water flow and implement the forward washing process or backwashing process. For example, when the backwashing assembly is disposed above the resin tank, the lower drain port 7 of the water distribution pipe 2 extending to the bottom of the resin tank may be connected to the raw water waterway 3, and the upper drain port 8 near the control valve 1 of the water distribution pipe 2 may be connected to the waste water waterway 6, so that the water flow enters into the resin tank from the lower drain port 7 of the water distribution pipe 2 extending to the bottom of the resin tank, then flows upward, flows through the water distribution pipe 2 near the upper drain port 8 of the control valve 1, and finally is discharged from the waste water waterway 6 to implement the backwashing process.

It is understood that the specific model of the control valve 1 may be selected according to the actual situation, as long as the waterway control is implemented. For example, it may be a TMF74A3 multi-function control valve.

In an embodiment, the upper drain port 8 at the upper end of the water distribution pipe 2 may be fixedly connected with an upper strainer, and the lower drain port 7 at the lower end of the water distribution pipe 2 may be fixedly connected with a lower strainer, so as to prevent the resin from entering into the water distribution pipe to cause loss.

In an embodiment, the upper drain port 8 at the upper end of the water distribution pipe 2 may also be fixedly connected with an upper water distributor, and the lower drain port 7 at the lower end of the water distribution pipe 2 may be fixedly connected with a lower water distributor to realize uniform water distribution.

In order to avoid water leakage due to excessive water pressure, in an embodiment, the interface of the control valve 1 connecting any waterway may be provided with a flow restriction buckle, which may specifically be a silicone gasket.

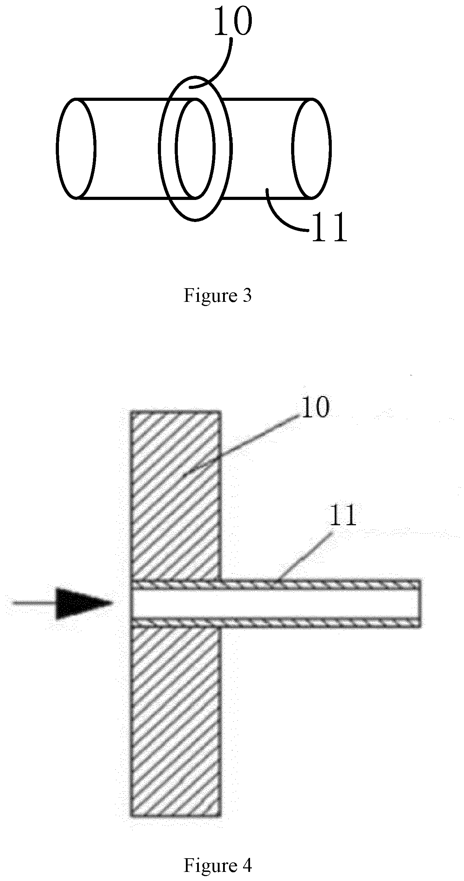

Considering that it is necessary to set a constant water flow, such as 0.125GPM, to avoid too much or too little salt consumption during resin regeneration, but since the flow restriction buckle is usually a flexible material, such as silicone, and the silicone will undergo deformation due to the change in water pressure, resulting in the water flow not being constant, which leads to the change in the salt consumption. To this end, in an embodiment, as shown in Fig. 3 or Fig. 4, at least one of two interfaces of the backwashing assembly for connecting to the raw water waterway and for connecting to the soft water waterway may be provided with a rigid pipeline 11 through which water flows, in addition to a flow restriction buckle 10. The rigid pipeline 11 passes through the through hole of the flow restriction buckle 10, and is socket jointed with the through hole of the flow restriction buckle 10 and is in interference fit with the through hole of the flow restriction buckle 10. The deformation of the rigid pipeline caused by the water pressure is relatively small, which allows the water flow to be constant, thereby avoiding changes in salt consumption due to influence of the water flow caused by excessive water pressure. Wherein the rigid pipeline may be a round plastic pipeline or an alloy pipeline, such as a round steel pin.

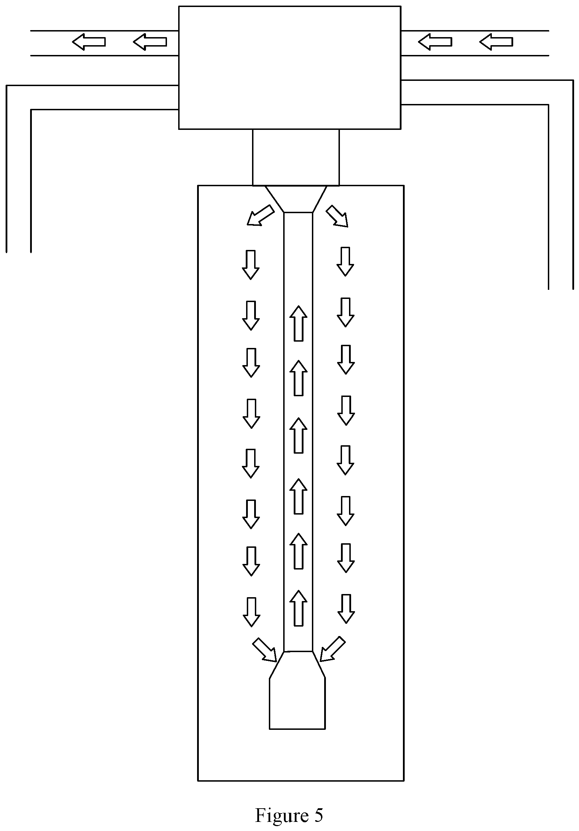

In an embodiment, during the preparation of soft water, as shown in Fig. 5, the controller controls the backwashing assembly to connect the raw water waterway and the drain port disposed above the resin tank of the backwashing assembly, as well as to connect the drain port disposed below the resin tank of the backwashing assembly and the soft water waterway, so that the raw water enters the resin tank from the drain port disposed above the resin tank of the backwashing assembly, and the resin in the resin tank adsorbs calcium ions and magnesium ions in the raw water, and to form the soft water which then flows through the soft water waterway through the drain port of the backwashing assembly disposed below the resin tank, so as to complete the preparation of the soft water.

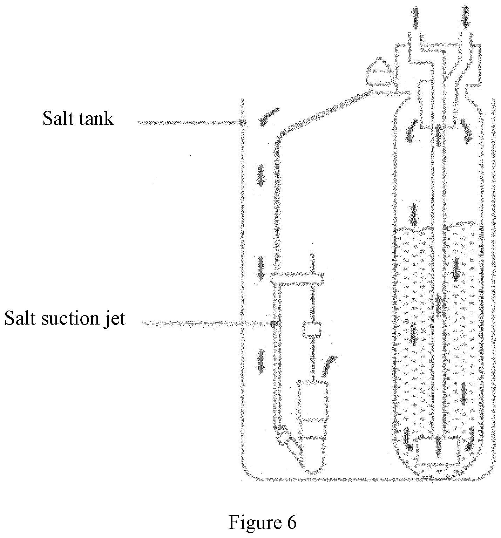

When the preparation period of soft water expires, the resin needs to be regenerated due to a large number of calcium ions and magnesium ions are adsorbed on it. During regenerating the resin, as shown in Fig. 6, the controller controls the control valve in the backwashing assembly to connect the raw water waterway and the upper drain port disposed above the resin tank of the backwashing assembly, and to connect the lower drain port disposed below the resin tank of the backwashing assembly and the soft water waterway, so that the raw water enters the resin tank from the upper drain port disposed above the resin tank of the backwashing assembly and the resin in the resin tank adsorbs calcium ions and magnesium ions in the raw water. After the soft water is formed, it flows through the soft water waterway through the lower drain port disposed below the resin tank of the backwashing assembly, and then it is injected into the salt tank through the branch of the soft water waterway to dissolve the salt in the salt tank, thus forming a salt solution in the salt tank. In order to make the generated salt solution soften the resin more effectively, a water injection duration may be set in advance. When the controller detects that the water injection duration of soft water injected into the salt tank reaches the preset duration, it controls to close the backwashing assembly and to stop the water injection, so as to avoid the insufficient softening effect of the salt solution on the resin due to too high or too low concentration, thereby improving the softening effect of the salt solution on the resin. The preset duration may be determined according to the amount of soft water to be injected into the salt tank and the intake flow of salt water. Among them, the amount of soft water to be injected into the salt tank may be determined according to the salt consumption for per liter of resin regeneration and the total amount of resin. In some embodiments, the amount of soft water to be injected into the salt tank = (salt consumption for per liter of resin regeneration × total amount of resin)/360. Preset duration (min) = (water injection/BLFC)/3.785, wherein BLFC is the intake flow of salt water. For example, it is preset that the salt consumption for per liter of resin regeneration is 85 g, and the intake flow of salt water is 0.125 GPM, if the loading amount of resin is 9 L, the water injection duration is = {[(85 × 9)/360]/0.1251/3.785 = 4.49 minutes.

Wherein, the salt consumption for per liter of resin regeneration may be determined through a lot of experiments, and the specifications of BLFC may be set according to the actual situation, such as 0.125 GPM, 0.25 GPM, and 0.5 GPM, and 0.125 GPM or 0.25 GPM is usually selected for household water softening equipment. Alternatively, the specification of BLFC may be determined according to the loading amounts of the resin. For example, the specification of BLFC for 10 L resin is 0.125 GPM. Understandably, for different specifications of BLFC, it is needed to select rigid pipes with different sizes, so that the water flow may be maintained at the selected specifications.

After completing water injection, due to the need to ensure that the salt solution in the salt tank needs to reach a target concentration, such as a concentration of 26.4%, the salt solution may be brought to the target concentration by presetting the duration of the salt dissolution, such as two hours. Wherein, the preset duration of the salt dissolution may be determined by a large amount of salt dissolving.

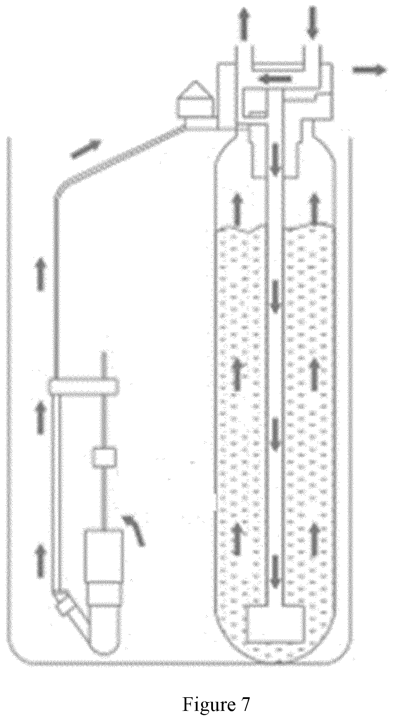

As shown in Fig. 7, when the controller detects that the duration of the salt dissolution reaches a preset duration of the salt dissolution, it controls the backwashing assembly to close the soft water waterway and connect the salt water waterway and the side of the water distribution pipe extending to the bottom of the resin tank. At this time, the high-pressure raw water is sent into the nozzle from the pressure pipe by the salt suction jet of the salt water waterway with Venturi principle, and the energy of pressure after passing through the nozzle may be changed into high-speed kinetic energy to take away the liquid (or gas) around the nozzle. At this time, the salt solution sucked from the salt tank continuously enters into the control valve of the backwashing assembly to be mixed with the raw water due to vacuum at the throat of the diffusion chamber caused by the high speed formed at the outlet of the nozzle, and the mixed low-concentration salt solution flows through the resin layer through the lower drain port of the water distribution pipe extending to the bottom of the resin tank, so that sodium ions in the salt solution are exchanged with calcium ions and magnesium ions adsorbed in the resin, and the softening and absorption capacity of the resin is restored. It has been actually verified by the laboratory that the salt consumption is the most preferred when the concentration of salt water after mixing by the venturi of the salt suction jet is between 4% to 6%. Among them, the specification of the salt suction jet may be any one of 0#, 00#, 000# and 0000#, which may be set according to the actual situation. For example, the water softening device filled with 9L resin is taken as an example, and a 0000# jet device may be selected for the corresponding salt suction jet.

In an embodiment, when washing the resin of the resin tank in the water softening device, the controller may control the time for washing the resin of the resin tank with salt solution according to a preset time. When the controller determines that the washing time of the resin by the salt solution reaches the preset duration, it can be determined that the washing of the resin by the salt solution is completed, and at this time, the backwashing assembly may be controlled to connect the resin tank with the raw water waterway to wash the resin in the resin tank. Among them, the preset duration may be set according to the actual situation. For example, take the water softening device obtained by filling with 9L resin as an example, when using 0000# jet device, if the preset duration is 45 minutes, it is found that the salt content in the wastewater discharged from the wastewater waterway is the lowest, and at this time, the preset duration is 45 minutes.

In an embodiment, after determining that the washing of the resin by the salt solution is completed, the controller may control the backwashing assembly to start backwashing process, and connect the water distribution pipe extending to the bottom of the resin tank in the backwashing assembly with the raw water waterway to backwash the resin in the resin tank.

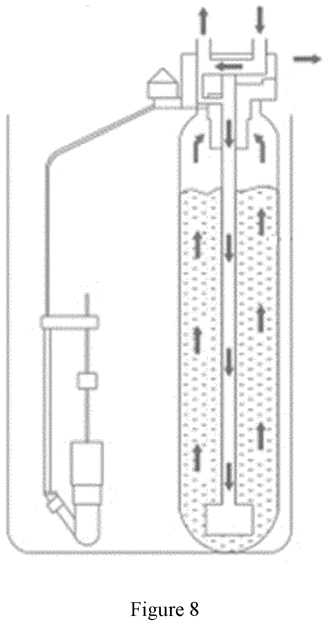

Exemplarily, as shown in Fig. 8, after determining that the washing of the resin by the salt solution is completed, the controller controls the control valve in the backwashing assembly to close the salt water waterway and connect the raw water waterway with the lower drain port of the water distribution pipe extending to the bottom of the resin tank, and controls the control valve in the backwashing assembly to connect the upper drain port of the water distribution pipe close to the control valve with the waste water waterway, so that the raw water enters into the resin tank from the side of the water distribution pipe extending to the bottom of the resin tank, then flows upward, flows through the water distribution pipe near the upper drain port of the control valve, and finally is discharged from the waste water waterway to implement the backwashing process.

Wherein, the interface of the control valve access to the wastewater waterway may be provided with a drain flow restriction buckle to restrict the flow rate of the wastewater waterway. The drain flow restriction buckle may be made of flexible material, such as silicone gasket, and its specifications may be set according to the actual situation, such as any one of 1.0 GPM, 1.2 GPM, 1.5 GPM, 2.0 GPM, 2.4 GPM, 3.0 GPM, 4.0 GPM and 5.0 GPM.

In an embodiment, it further comprises:
determining that a washing duration of the backwashing process has reached a first preset duration, and controlling the backwashing assembly to stop the backwashing process.

Wherein, the first preset duration may be determined according to the resin capacity and the specifications of the drain flow restriction buckle. Exemplarily, a large number of experiments are conducted in advance to obtain the mapping relationship between the data combination consisting of the resin capacity and the specifications of the drain flow restriction buckle at a target flow rate, for example, 15 m/hr, and the first preset duration and record it in the data relationship mapping table. During backwashing process, the controller may obtain a data combination consisting of resin capacity and specifications of the drain flow restriction buckle, and use this data combination to match the corresponding first preset duration, such as 2 minutes, from the data relationship mapping table. Then, the washing duration of backwashing process is detected in real time, and when the washing duration reaches 2 minutes, the backwashing assembly is controlled to stop backwashing process.

In one embodiment, during resin regeneration, the controller controls the control valve of the backwashing assembly to close the soft water waterway, and controls the control valve of the backwashing assembly to connect the salt water waterway, the raw water waterway and the lower drain port of the water distribution pipe extending to the bottom of the resin tank. In this way, the mixed low-concentration salt solution flows through the resin layer through the lower drain port of the water distribution pipe extending to the bottom of the resin tank, the resin layer is washed by the salt solution, and then the wastewater generated after washing is discharged from the upper drain port of the water distribution pipe close to the control valve through the wastewater waterway. After the washing time by the salt solution reaches the preset duration, the controller controls the control valve of the backwashing assembly to close the salt water waterway, so that the raw water flows through the resin via the lower drain port extending to the bottom of the resin tank of water distribution pipe, backwashes the resin layer in combination with the remaining salt solution attached to the resin, and then the wastewater generated after backwashing process is discharged from the upper drain port close to the of the control valve of the water distribution pipe through the wastewater waterway.

After controlling the backwashing assembly to suck the salt solution to wash the resin, the backwashing assembly is then controlled to suck the raw water to backwash the resin, so as to more effectively remove the calcium ions and magnesium ions trapped in the resin, thereby improving the regeneration efficiency of the resin without adding the salt solution again.

In the backwashing process, because the resin is softened by the salt solution remaining in the resin, in one embodiment, it further comprises:
determining that the salt content of wastewater discharged in the backwashing process is less than a first preset value, and controlling the backwashing assembly to stop the backwashing process.

A concentration sensor may be arranged at the interface where the backwashing assembly is connected to the wastewater waterway, and the concentration sensor is connected to the controller for detecting the salt content of the discharged wastewater. In the backwashing process, the controller may detect the salt content of the discharged wastewater in real time through the concentration sensor. When the controller detects that the salt content of the discharged wastewater is less than the first preset value through the concentration sensor, it controls the backwashing assembly to stop backwashing process, thus avoiding the waste of raw water caused by excessive backwashing and saving water resources.

In an embodiment, after determining that the washing of the resin by the salt solution is completed, the backwashing assembly may be controlled to start the forward washing process, and the water outlet above the resin in the backwashing assembly is connected to the raw water waterway to carry out the forward washing of the resin in the resin tank.

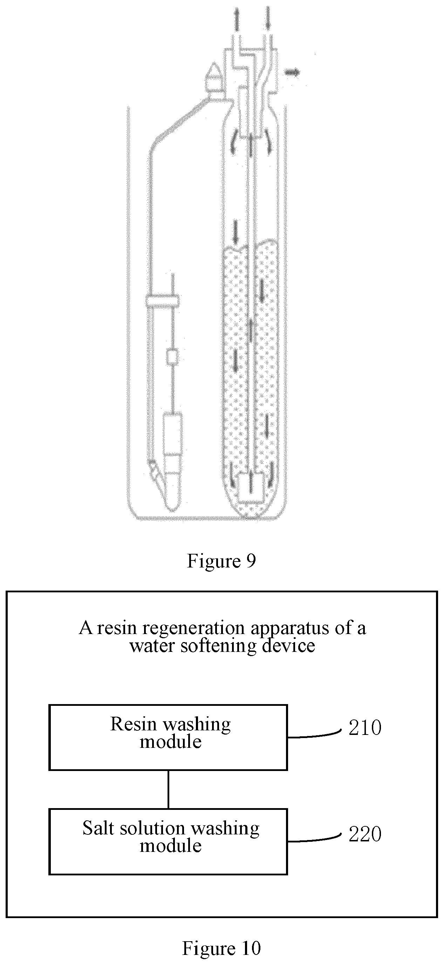

Exemplarily, as shown in Fig. 9, the controller may control the control valve in the backwashing assembly to connect the raw water waterway and the upper drain port of the water distribution pipe close to the control valve, and control the control valve in the backwashing assembly to connect the lower drain port extending to the bottom of the resin tank of the water distribution pipe and the waste water waterway, so that the raw water enters into the resin tank from the upper drain port close to the control valve of the water distribution pipe, then flows downwards, flows through the lower drain port extending to the bottom of the resin tank of the water distribution pipe, and finally is discharged from the waste water waterway to realize forward washing.

In an embodiment, it further comprises:
determining that the washing duration of the forward washing process has reached a second preset duration, and controlling the backwashing assembly to stop the forward washing process.

Wherein, the second preset duration may be determined according to the resin capacity and the specifications of the drain flow restriction buckle. Exemplarily, a large number of experiments are conducted in advance to obtain the mapping relationship between the data combination consisting of the resin capacity and the specifications of the drain flow restriction buckle at a target flow rate, for example, 15 m/hr, and the second preset duration and record it in the data relationship mapping table. During forward washing process, the controller may obtain a data combination consisting of resin capacity and specifications of the drain flow restriction buckle, and use this data combination to match the corresponding second preset duration, such as 3 minutes, from the data relationship mapping table. Then, the washing duration of forward washing process is detected in real time, and when the washing duration reaches 3 minutes, the backwashing assembly is controlled to stop the forward washing process.

In an embodiment, the controller may directly control the backwashing assembly to forward wash the resin after determining that the washing of the resin by the salt solution is completed. Exemplarily, during resin regeneration, the controller controls the control valve of the backwashing assembly to close the soft water waterway, and controls the control valve of the backwashing assembly to connect the salt water waterway, the raw water waterway and the lower drain port of the water distribution pipe extending to the bottom of the resin tank. In this way, the mixed low-concentration salt solution flows through the resin layer through the lower drain port of the water distribution pipe extending to the bottom of the resin tank, the resin layer is washed by the salt solution, and then the wastewater generated after washing is discharged from the upper drain port of the water distribution pipe close to the control valve through the wastewater waterway. After the washing time by the salt solution reaches the preset duration, the controller controls the control valve of the backwashing assembly to close the salt water waterway, and switches the connection state of the backwashing assembly so that the raw water waterway and the upper drain port of the water distribution pipe close to the control valve are connected, and the lower drain port of the water distribution pipe and the wastewater waterway are connected, so that the raw water flows through the resin via the upper drain port of water distribution pipe, forward washes the resin layer in combination with the remaining salt solution attached to the resin, and then the wastewater generated after forward washing process is discharged from the lower drain port close to the of the control valve of the water distribution pipe through the wastewater waterway.

In order to further improve the regeneration effect of resin, in one embodiment, the controller may, after determining that the washing of the resin by the salt solution is completed, control the backwashing assembly to forward wash the resin first, and when the duration of the forward washing process reaches the second preset duration, control the backwashing assembly to backwash the resin, and determine that the resin regeneration is completed until the duration of the backwashing process reaches the first preset duration.

Considering that when backwashing, the resin begins to expand due to the action of water flow, which will affect the softening effect on the soft water. Therefore, in order to improve both the regeneration effect of resin and the softening effect of soft water, in one embodiment, the controller may, after determining that the washing of the resin by the salt solution is completed, control the backwashing assembly to back wash the resin first, and when the duration of the back washing reaches the first preset duration, control the backwashing assembly to forward wash the resin, and determine that the resin regeneration is completed until the duration of the forward washing process reaches the second preset duration.

Exemplarily, during resin regeneration, the controller controls the control valve of the backwashing assembly to close the soft water waterway, and controls the control valve of the backwashing assembly to connect the salt water waterway, the raw water waterway and the lower drain port of the water distribution pipe extending to the bottom of the resin tank. In this way, the mixed low-concentration salt solution flows through the resin layer through the lower drain port of the water distribution pipe extending to the bottom of the resin tank, the resin layer is washed by the salt solution, and then the wastewater generated after washing is discharged from the upper drain port of the water distribution pipe close to the control valve 1 through the wastewater waterway. After the washing time by the salt solution reaches the preset duration, the controller controls the control valve of the backwashing assembly to close the salt water waterway, so that the raw water flows through the resin via the lower drain port of water distribution pipe extending to the bottom of the resin tank, backwashes the resin layer in combination with the remaining salt solution attached to the resin, and then the wastewater generated after backwashing process is discharged from the upper drain port close to the of the control valve of the water distribution pipe through the wastewater waterway. When the backwashing process duration reaches a preset duration, or it is determined that the salt content of wastewater discharged in the backwashing process is less than a first preset value, the connection state of the backwashing assembly is switched so that the raw water waterway is connected to the upper drain port of the water distribution pipe close to the control valve, and the lower drain port of the water distribution pipe is connected to the wastewater waterway, so that the raw water flows through the resin through the upper drain port of the water distribution pipe, and the resin layer is forward washed in combination with the remaining salt solution attached to the resin, and then the wastewater generated after forward washing process is discharged from the lower drain port of the water distribution pipe through the wastewater waterway.

By performing forward washing process to the resin after backwashing process, the salt water at the bottom of the resin tank may be washed away to further soften the resin. At the same time, because the water flows downward through the resin during backwashing process, the resin may be compacted, thus improving the water softening capacity of the resin.

Moreover, it is proved by experiments that the regeneration process of the water softening device with a loading amount of 9 L of resin may reach a salt consumption of 85 g/L. Compared with the salt consumption of 170 g/L required by the existing water softening device for resin regeneration, the salt consumption per regeneration is reduced by 50%; and the availability of salt tanks of the same volume has been extended by 200%, and the money and time spent by users on consumables are saved by more than 50%.

In the forward washing process, because it also uses the salt solution remaining in the resin to soften the resin, in one embodiment, it further comprises:
determining that the salt content of wastewater discharged in the forward washing process is less than a second preset value, and controlling the backwashing assembly to stop the forward washing process.

In the forward washing process, the controller may detect the salt content of the discharged wastewater in real time through the concentration sensor. When the controller detects that the salt content of the discharged wastewater is less than the second preset value through the concentration sensor, it controls the backwashing assembly to stop the forward washing process, thus avoiding the waste of raw water caused by excessive forward washing and saving water resources.

Next, a resin regeneration apparatus of the water softening device provided by the disclosure will be described, and the resin regeneration apparatus of the water softening device described below and the method for regenerating resin of a water softening device described above can refer to each other correspondingly.

In an embodiment, as shown in Fig. 10, there is provided a resin regeneration apparatus for a water softening device, comprising:
a salt solution washing module 210 that is used for controlling the backwashing assembly to suck the salt solution from the salt tank to wash the resin in a resin tank in the water softening device through the salt solution; and
a resin washing module 220 that is used for, in accordance with a determination that washing of the resin by the salt solution is completed, controlling the backwashing assembly to connect the resin tank with a raw water waterway, so as to obtain raw water from the raw water waterway to wash the resin in the resin tank.

By controlling the backwashing assembly to suck the salt solution to wash the resin, and then controlling the backwashing assembly to connect a resin tank with a raw water waterway, and using the raw water to wash the water-softening salt solution attached onto the resin, so that the water-softening salt solution attached onto the resin may be utilized again to adsorb more calcium ions and magnesium ions, and allow the softening of the resin again. Moreover, the calcium ions and magnesium ions are fully adsorbed after a long period of time and massive process, but the resin regeneration process takes only a short time, so only a small amount of calcium ions and magnesium ions are adsorbed after a short period of washing with raw water, which will not affect the softening effect of the resin by using the water-softening salt solution attached onto the resin, thus effectively reducing the salt consumption and saving natural resources while enabling the resin to restore a better softening capacity.

In an embodiment, the resin washing module 220 is specifically used for:
controlling the backwashing assembly to start backwashing process, and connecting the lower drain port of the water distribution pipe extending to the bottom of the resin tank in the backwashing assembly with the raw water waterway, so as to obtain raw water from the raw water waterway to backwash the resin of the resin tank.

In an embodiment, the resin washing module 220 is also used for:
determining that the backwashing duration of the backwashing process reaches a first preset duration, and controlling the backwashing assembly to stop the backwashing process.

In an embodiment, the resin washing module 220 is also used for:
determining that the salt content of wastewater discharged in the backwashing process is less than a first preset value, and controlling the backwashing assembly to stop the backwashing process.

In an embodiment, the resin washing module 220 is specifically used for:
controlling the backwashing assembly to start forward washing process, and connecting the upper drain port disposed above the resin in the backwashing assembly with the raw water waterway, so as to obtain raw water from the raw water waterway for forward washing the resin in the resin tank.

In an embodiment, the resin washing module 220 is also used for:
determining that the washing duration of the forward washing process reaches a second preset duration, and controlling the backwashing assembly to stop the forward washing process.

In an embodiment, the resin washing module 220 is also used for:
determining that the salt content of wastewater discharged in the forward washing process is less than a second preset value, and controlling the backwashing assembly to stop the forward washing process.

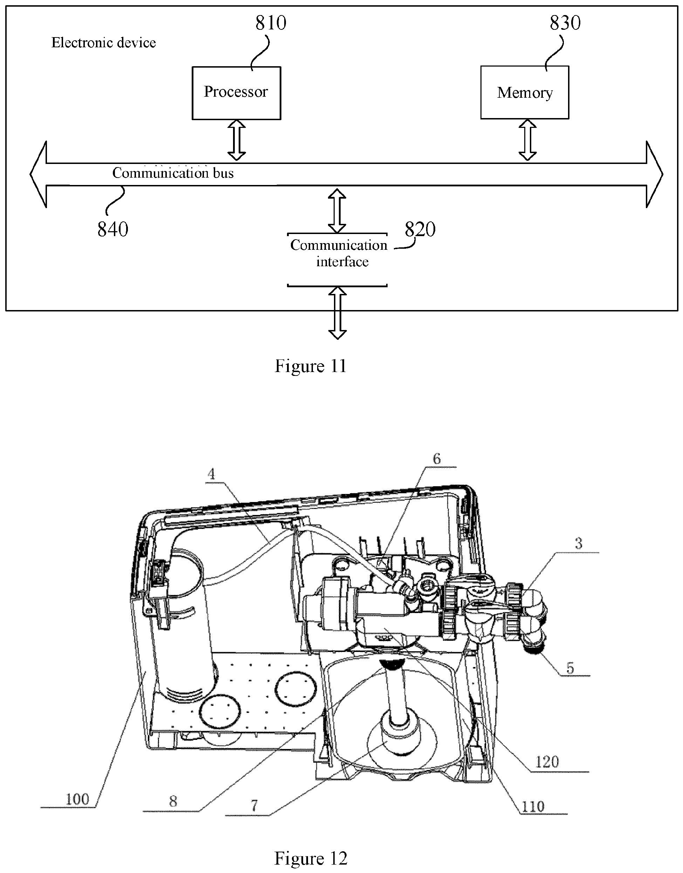

Figure 11 exemplifies a schematic diagram of a physical structure of an electronic device, as shown in Fig. 11, the electronic device may comprise a processor 810, a communication interface 820, a memory 830 and a communication bus 840, wherein the processor 810, the communication interface 820 and the memory 830 accomplish communication with each other through the communication bus 840. The processor 810 may call the computer program in the memory 830 to execute the method for regenerating resin of a water softening device, including, for example:
controlling the backwashing assembly to suck the salt solution from the salt tank, and washing the resin in the resin tank in the water softening device;
in accordance with a determination that washing of the resin by the salt solution is completed, controlling the backwashing assembly to connect the resin tank with the raw water waterway, so as to obtain raw water from the raw water waterway to wash the resin in the resin tank;
wherein, the backwashing assembly is used for performing forward washing process or backwashing process.

In addition, the logic instructions in the above-mentioned memory 830 may, when implemented in the form of a software functional unit and sold or used as a stand-alone product, be stored in a computer-readable storage medium. Based on this understanding, the technical solutions of the disclosure, essentially, or portions of the technical solutions that contribute to the prior art, or portions of the technical solutions, may be embodied in the form of a software product, which is stored in a storage medium and includes several instructions to allow a computer device (which may be a personal computer, a server, a network device, etc.) execute all or part of the steps of the methods of various embodiments of the disclosure. The aforementioned storage media include: U disk, mobile hard disk, Read-Only Memory (ROM), Random Access Memory (RAM), magnetic disk or optical disk and other media that can store program codes.

On the other hand, embodiments of the disclosure also provide a storage medium, which includes a computer program, and the computer program may be stored on a non-transient computer-readable storage medium. When the computer program is executed by a processor, the computer being capable of executing a resin regeneration method for a water softening device provided by embodiments described above, comprising, for example:
controlling the backwashing assembly to suck the salt solution from the salt tank, and washing the resin in the resin tank in the water softening device;
in accordance with a determination that washing of the resin by the salt solution is completed, controlling the backwashing assembly to connect the resin tank with a raw water waterway, so as to obtain raw water from the raw water waterway to wash the resin in the resin tank;
wherein, the backwashing assembly is used for performing forward washing process or backwashing process.

On the other hand, the embodiments of the disclosure also provide a processor-readable storage medium, in which a computer program is stored, and the computer program is used to allow the processor to execute the methods provided in the above embodiments, for example, comprising:
controlling the backwashing assembly to suck the salt solution from the salt tank, and washing the resin in the resin tank in the water softening device;
in accordance with a determination that washing of the resin by the salt solution is completed, controlling the backwashing assembly to connect the resin tank with a raw water waterway, so as to obtain raw water from the raw water waterway to wash the resin in the resin tank;
wherein, the backwashing assembly is used for performing forward washing process or backwashing process.

The processor-readable storage medium may be any available medium or data storage device that the processor can access, including but not limited to magnetic memory (such as floppy disk, hard disk, magnetic tape, magneto-optical disk (MO), etc.), optical memory (such as CD, DVD, BD, HVD and the like), and semiconductor memory (such as ROM, EPROM, EEPROM, non-volatile memory (NAND FLASH) and solid state disk (SSD)), and the like.

In an embodiment, as shown in Fig. 12, there is also provided a water softening device, comprising:
a salt tank 100 that is used for storing a salt solution;
a resin tank 110, the resin tank being provided with resin;
a backwashing assembly 120, a water inlet side of the backwashing assembly is connected to the salt tank and a raw water waterway, and a water outlet side of the backwashing assembly is connected to the resin tank for executing forward washing process or backwashing process; and
a controller (not illustrated) connected with the backwashing assembly for executing the method for regenerating resin of a water softening device according to any of the above embodiments.

In an embodiment, the interface of the backwashing assembly for connecting to the raw water waterway is provided with a flow restriction buckle and a rigid pipeline through which the water flows, and the rigid pipeline is in interference fit with the through hole of the flow restriction buckle.

The above-described embodiments of the device are merely illustrative, in which the units described as separate components may or may not be physically separated, and the components displayed as units may or may not be physical units, that is, they may be located at a single place or they may also be distributed to a plurality of network units. Some or all of these modules may be selected according to actual needs to fulfill the purpose of the embodiment. It can be understood and implemented by a person of ordinary skill in the art without creative labor.

From the above description of the embodiments, a person skilled in the art can clearly understand that each embodiment can be realized by means of software and necessary general hardware platform, and of course it can also be realized by hardware. Based on this understanding, the above technical solutions which essentially or rather contribute to the prior art may be embodied in the form of a software product which may be stored in a computer-readable storage medium, such as a ROM/RAM, a magnetic disk, a CD-ROM, etc., and which comprises a number of instructions to allow a computer device (which may be a personal computer, a server, or a network device, etc.) to execute the various embodiments or certain portions of embodiments.

Finally, it should be noted that the above embodiments are only used to illustrate the technical solutions of the disclosure, but not to limit it; although the disclosure has been described in detail with reference to the foregoing embodiments, those skilled in the art should understand that it is still possible to modify the technical solutions described in the foregoing embodiments, or to replace some technical features with equivalents; however, these modifications or substitutions do not make the essence of the corresponding technical solutions deviate from the spirit and scope of the technical solutions of various embodiments of this disclosure.

## Claims

1. A method for regenerating resin of a water softening device, wherein the method comprises:
controlling a backwashing assembly to suck a salt solution from a salt tank to wash the resin in a resin tank in the water softening device through the salt solution;
in accordance with a determination that washing of the resin by the salt solution is completed, controlling the backwashing assembly to connect the resin tank with a raw water waterway, so as to obtain raw water from the raw water waterway to wash the resin in the resin tank.

2. The method for regenerating resin of a water softening device according to claim 1, wherein controlling the backwashing assembly to connect the resin tank with the raw water waterway to obtain raw water from the raw water waterway to wash the resin in the resin tank comprises:
controlling the backwashing assembly to start a backwashing process by connecting a lower drain port of a water distribution pipe extending to the bottom of the resin tank in the backwashing assembly with the raw water waterway, so as to obtain raw water from the raw water waterway to backwash the resin of the resin tank.

3. The method for regenerating resin of a water softening device according to claim 2, wherein the method further comprises:
in accordance with a determination that a washing duration of the backwashing process has reached a first preset duration, controlling the backwashing assembly to stop the backwashing process.

4. The method for regenerating resin of a water softening device according to claim 3, wherein the method further comprises:
in accordance with a determination that the salt content of wastewater discharged in the backwashing process is less than a first preset value, controlling the backwashing assembly to stop the backwashing process.

5. The method for regenerating resin of a water softening device according to any one of claims 1 to 4, wherein controlling the backwashing assembly to connect the resin tank with the raw water waterway to obtain raw water from the raw water waterway to wash the resin in the resin tank comprises:
controlling the backwashing assembly to start a forward washing process by connecting an upper drain port disposed above the resin in the backwashing assembly with the raw water waterway, so as to obtain raw water from the raw water waterway for forward washing the resin in the resin tank.

6. The method for regenerating resin of a water softening device according to claim 5, wherein the method further comprises:
in accordance with a determination that the washing duration of the forward washing process has reached a second preset duration, controlling the backwashing assembly to stop the forward washing process.

7. The method for regenerating resin of a water softening device according to claim 5, wherein the method further comprises:
in accordance with a determination that the salt content of wastewater discharged in the forward washing process is less than a second preset value, controlling the backwashing assembly to stop the forward washing process.

8. A resin regeneration apparatus for a water softening device, wherein the apparatus comprises:
a salt solution washing module that is used for controlling a backwashing assembly to suck a salt solution from a salt tank to wash the resin in a resin tank in the water softening device through the salt solution;
a resin washing module that is used for in accordance with a determination that washing of the resin by the salt solution is completed, controlling the backwashing assembly to connect the resin tank with a raw water waterway, so as to obtain raw water from the raw water waterway to wash the resin in the resin tank.

9. An electronic device, comprising a processor and a memory storing a computer program, wherein, the method for regenerating resin of a water softening device according to any one of claims 1 to 7 is implemented when the computer program is executed by the processor.

10. A computer-readable storage medium on which a computer program is stored, wherein, the method for regenerating resin of a water softening device according to any one of claims 1 to 7 is implemented when the computer program is executed by the processor.

11. A water softening device, wherein the water softening device comprises:
a salt tank that is used for storing a salt solution;
a resin tank, the resin tank being provided with resin;
a backwashing assembly, wherein a water inlet side of the backwashing assembly is connected to the salt tank and a raw water waterway, and a water outlet side of the backwashing assembly is connected to the resin tank for executing forward washing process or backwashing process; and
a controller connected with the backwashing assembly for executing the method for regenerating resin of a water softening device according to any one of claims 1 to 7.

12. The water softening device according to claim 11, wherein, the interface of the backwashing assembly for connecting to the raw water waterway is provided with a flow restriction buckle and a rigid pipeline through which the water flows, and the rigid pipeline is in interference fit with the through hole of the flow restriction buckle.
